# EUROPEAN PATENT APPLICATION

(11) **EP 2 423 103 A1**
(43) Date of publication of application: **29.02.2012**
(21) Application number: 10460034.1
(22) Date of filing: 26.08.2010
(51) Int. Cl.: B63H 23/24

(54) **Electric propulsion of a ship incorporating an energy storage system**

(71) Applicant: ABB Technology AG, 8050 Zürich (CH)
(72) Inventor: Ruszczyk, Adam, 30-316 Krakow (PL); Wojcik, Mariusz, Plaza (PL)
(74) Representative: Chochorowska-Winiarska, Krystyna

(57) **Abstract**

The invention relates to an electric propulsion system of a ship containing an energy storage system. The electric propulsion system is applicable on ships with an AC electric power network (3), which contain a system or systems for storing energy (10). The electric propulsion system (4) of a ship containing an energy storage system, comprising connected with one another an electric motor (6) for driving the ship's propeller (5), a propulsion inverter (7) and a propulsion transformer (8). The transformer (8) is connected to the AC power network (3) installed on the ship which contains at least one electric energy storage device(10) and the system is characterized in that at least one energy storage device (10) is connected to the DC intermediate circuit (7.2) of the inverter (7) in such way that the output of each energy storage device (10) is connected with the input of the DC-to-DC converter (9) whose output is directly coupled with the DC intermediate circuit (7.2), the intermediate circuit (7.2) being connected between the input circuit (7.1) of the inverter (7) and the output circuit (7.3) of the inverter (7).

## Description

The invention relates to an electric propulsion system of a ship incorporating an energy storage system. The electric propulsion system is applicable on ships with an AC electric power network , which contain a system or systems for storing energy. The energy storage system makes use of technology of electric energy storing in electrochemical storages and makes it possible to connect renewable sources of energy to the power system of the ship.

Electric propulsion systems using electric motors for driving ships' propellers require the installation of power plants on the ships to generate electric energy. In most solutions, electric generators are used for generating electric energy, in particular synchronous generators. A typical power plant on a ship consists of several generators. The generators are driven by combustion engines, in particular diesel engines, gas turbines or steam turbines. Combustion engines and generators, like other electric machines, are built to operate with the highest possible efficiency for loads similar to rated loads. Combustion engines reach their best efficiency when working at loads approximating 75 % of their rated power. Generators reach their best efficiency when working at rated loads. Operation with the highest efficiency is called optimum operation, and the load for which the optimum operation is achieved is called optimum load. The efficiency of a system for generating electric energy which includes a combustion engine and an electric energy generator coupled with it is defined by the number of grams of fuel required to generate 1 kWh of electric energy. Thus defined efficiency is used to determine the optimum load of an electric energy generator. The operation of a generator at the optimum load causes that more electric energy can be generated for the same quantity of fuel used. All generators are connected to the power network of the ship. The power network of the ship is responsible for the distribution of electric energy generated in the generators to the electric propulsion system. The most commonly found power network on ships is the AC network, which is the consequence of the use of synchronous generators which generate alternating current. Less often, the power network of a ship is a DC network. DC power networks are not used to transmit large powers due to limitations connected with the values of voltages and currents in a DC network, the complicated process of changing the parameters of electric energy and the problem of ensuring galvanic separation. One of the limitations in the economic operation of a electric propulsion system of a ship with combustion engines and generators is a requirement to maintain reserve of power, which means that the generators work with a smaller load than the optimum load, and the total rated power of the combustion engines and generators installed on the ship exceeds the total power of consumers. Even at full load, it is not possible to operate all generators at the optimum load which would ensure the highest efficiency. During normal operation generators and combustion engines operate below the optimum load value, so that in case of a failure or disconnection of one of the generators it will be possible to generate such amount of electric energy in the other generators which will allow the operation of the electric motors driving the ships' oropellers at the full power range. Shutting down one of the generators to enable the other ones to operate at the highest efficiency is not practiced, because if power is suddenly lost in the operating generators, too much time may be needed for the start-up of the shut-down generator and its synchronization with the voltage of the ship's power network.

There are known various methods and systems for optimizing generator load, and thereby for reducing fuel consumption on ships.

For example, patent application WO 2009/030807 reveals a system for improving generator load level on a ship, which uses an energy storage system connected to the ship's power network. In order to ensure high reliability of the energy storage system, the number of energy storage systems is multiplied. The power network of the ship is supplied by generators driven by combustion engines. Energy produced by the generators is supplied through the ship's power network to the ship's electric propulsion system. Depending on the type of the ship's power network, two solutions are used. For an AC power network installed on the ship, energy storages are connected to the ship's power network through DC/AC power electronic converters and matching transformers, which together forms an energy storage system. For a DC power network, energy storages are connected to the ship's power network through direct current-to-direct current electronic power converters, so called DC/DC converters, together forming an energy storage system. If a DC power network is used, a braking resistor is additionally used, whose function is to lose excessive energy if there is a sudden energy surge in the ship's energy power network and if at the same time there is no possibility to store it. An inconvenience of the presented solution in the case of an AC power network installed on the ship is a reduction in the efficiency of energy storage systems caused by energy losses during energy transformation on the power electronic converter DC/AC and on the matching transformer. In order to ensure higher reliability, dual energy storage systems are used, which doubles losses and reduces the efficiency of the energy storage system, and the use of matching transformers increases the dimensions of the energy storage system. If there is a failure, there is no possibility to supply only the electric propulsion system from the energy storage system, which causes that the level of energy stored in energy storages has to be higher than required for the power supply of the electric propulsion system, because other electric equipment is also connected to the ship's power network. Disconnection of this equipment from the ship's power network requires additional time during which this equipment consumes energy from the energy storage system. This causes that the capacity of the connected energy storages has to be increased by the quantity of energy consumed by equipment other than the electric system. The DC/AC converter has to be designed for bigger currents than those required to supply only the electric propulsion system. Connection of the energy storage system directly to the ship's AC power network through a DC/AC power electronic converter without a matching transformer limits the applicability of this solution only to a ship's power network of a voltage not higher than 3 kV. With higher voltages the costs of installation and operation of the energy storage system make this solution unprofitable. DC power networks on ships are not commonly used due to limitations connected with the transmission of large power. The limitations in the transmitted power are the consequence of lower voltage in DC power networks of a ship as compared to AC power networks of a ship. The fact that it is not possible to use transformer to ensure galvanic separation of individual parts of the ship's power network also limits the range of application of a DC power network on a ship.

Patent application US 2009/0284228 makes known a system for reducing fuel consumption that comprises energy storage systems installed on a ship and connected with the ship's AC power network. The energy storage system includes energy storages connected to the an interface input. The interface used is responsible for switching the mode of operation of the electric energy storing device from the charge mode, i.e. energy accumulation mode, to the ship's energy network supply mode, i.e. the mode of consuming the accumulated energy. Through its output the interface is connected with the input of a DC/AC power electronic converter. The power electronic converter is used to convert energy accumulated in the energy storage device into alternating current. The output of the DC/AC power electronic converter is connected with the ship's AC power network through a conditioning device. The conditioning device is a filter or a matching transformer used to filter or match the value of the voltage at the output of the matching transformer or filter to the voltage of the ship's power network. One or more different types of energy storages can be used in the presented energy storage system. The presented system is a reserve source of power supply for all electric equipment used on the ship and connected to the ship's power network. This energy storage system is not dedicated to supply the electric propulsion system, which causes that the level of stored energy has to be higher than that required to supply the electric propulsion system, because also other electric consumers are connected to the ship's power network. In order to switch off equipment other than the electric propulsion system, additional time is necessary, during which this equipment consumes energy from the energy storage system, which causes that the capacity of the connected energy storages has to be increased by the quantity of energy consumed by equipment other than the electric propulsion system. The DC/AC converter has to be designed for bigger currents than those required to supply only the electric propulsion system. The energy storages are connected to the power electronic converter through an interface for switching the mode of operation of the device, which restricts the possible application of the energy storage system during fast, and especially unexpected transitions of the system from the charging state to the discharging state and vice versa.

The essence of the electric propulsion system of a ship containing an energy storage system in which the propulsion system contains connected with one another in sequence an electric motor for driving the ship's propeller, a propulsion inverter, and a propulsion transformer connected to the AC power network installed on the ship, where the energy storage system contains at least one electric energy storage, is that at least one energy storage device is connected to the DC intermediate circuit of the inverter in such way that the output of each energy storage device is connected with the input of the DC to DC converter whose output is directly coupled with the DC intermediate circuit, the DC intermediate circuit of the inverter being connected between the AC/DC input circuit of the inverter and the DC/AC output circuit of the inverter.

Preferably, the outputs of at least one additional DC/DC converter are connected to the DC intermediate circuit of the inverter, to whose input at least one fuel cell or at least one photo-voltaic cell is connected.

Preferably, the input circuit of the inverter is an alternating current-to-direct current converter.

Preferably, the output circuit of the inverter is a direct current-to-alternating current converter.

Preferably, the DC intermediate circuit of the inverter contains at least one capacitor which is connected into this circuit in parallel.

Preferably, the DC intermediate circuit of the inverter contains at least one reactor which is connected into this circuit in series.

Compared with known solutions, the inventive solution is distinguished by higher efficiency, because it uses less systems for converting electric energy on its way from the energy storage device to the electric motor which drives the ship's propeller. The elimination of some equipment, especially the additional AC/DC converters and the transformers that match the voltage to the voltage of the ship's power network and that are connected with the converters, simplifies the structure of the whole propulsion system of the ship and reduces the installation costs of this system. Energy accumulated in energy storages can be used only to supply the propulsion motors of the ship without the need to physically disconnect other, insignificant for the ship's operation consumers. The connection, in series or in parallel, of a larger number of DC/DC power electronic converters connected with energy storages, directly to the DC circuit of the inverter increases the reliability of the propulsion system. A damage to or shutdown of one of several DC/DC power electronic converters will not disrupt the operation of other DC/DC power electronic converters with the energy storages. The total quantity of energy available in the energy storages until the defect is repaired or until the switched-off DC/DC power electronic converters are switched-on again is reduced. Moreover, the inventive system allows to connect additional sources of energy, such as photo-voltaic cells or fuel cells.

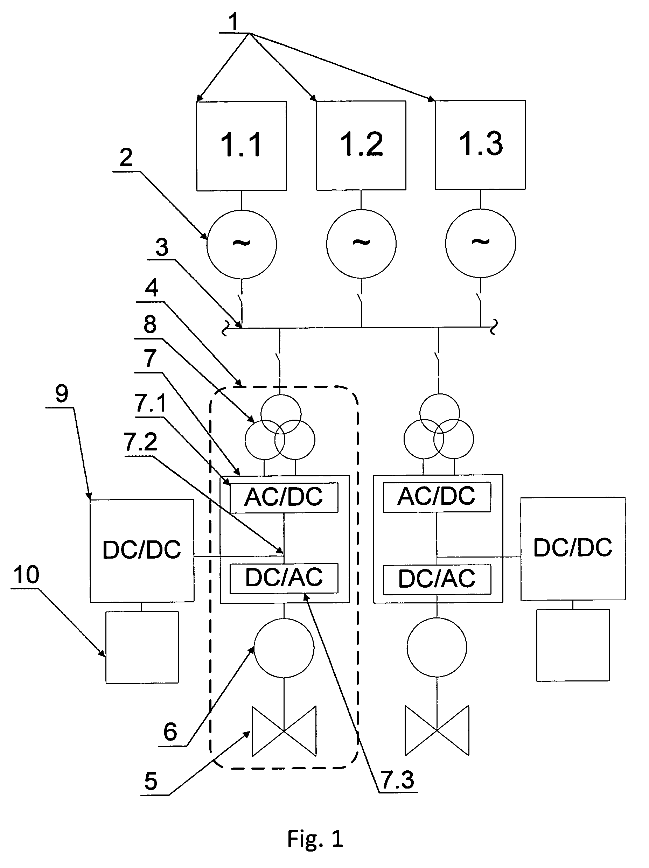

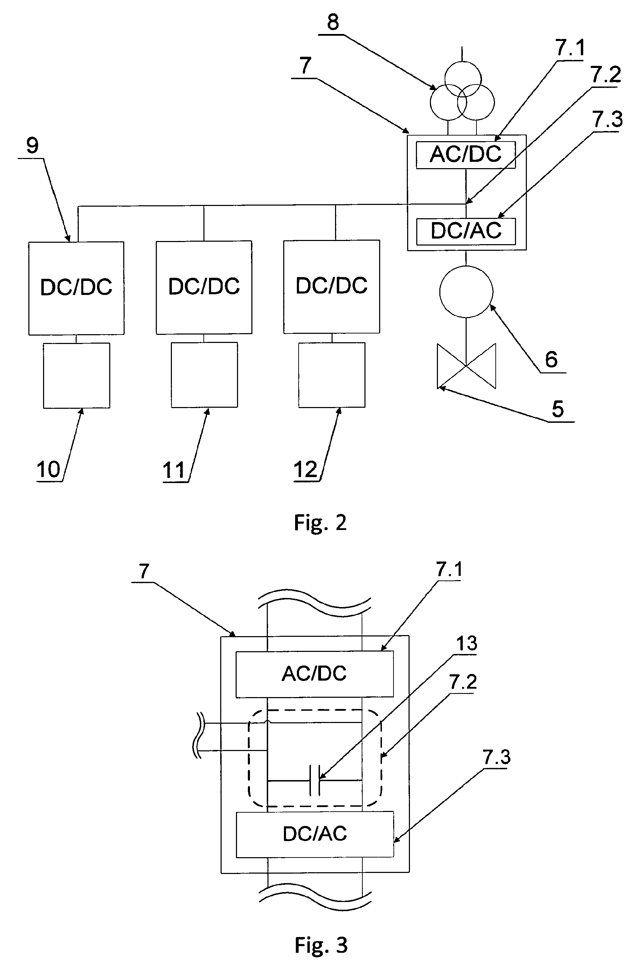

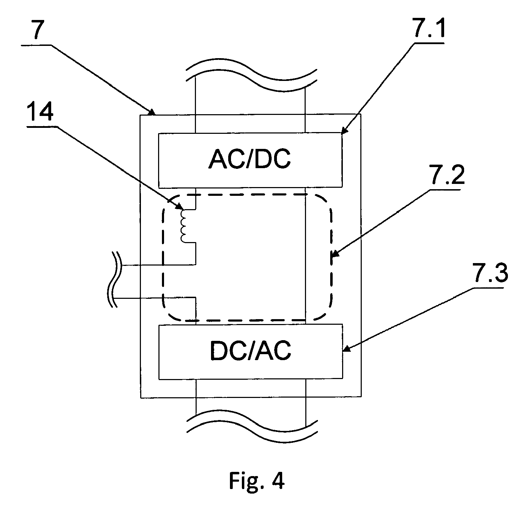

The subject of the invention is presented schematically as an embodiment in the drawing where fig. 1 shows a fragment of the electric power network of a ship with an energy storage system and with an electric propulsion system of the ship, fig. 2 -the electric propulsion system of the ship in a different embodiment, fig. 3 ― the intermediate circuit of the inverter of the propulsion system of the ship containing a capacitor, and fig. 4 - the intermediate circuit of the inverter of the propulsion system of the ship containing a reactor.
The electric power system of the ship contains a source of mechanical energy 1 necessary to supply electric power equipment, i.e. generators 2 that produce electric energy. The source of mechanical energy 1 is a diesel engine 1.1, a gas turbine 1.2, a steam turbine 1.3, which are used jointly or, which is not shown in the drawing, independently from one another and in any combination. Each of the sources of mechanical energy 1.1, 1.2, 1.3 is connected with a separate source that generates electric energy, i.e. preferably a synchronous generator 2 which is connected with the AC power network 3 installed on the ship, through which electric energy is supplied to at least one electric propulsion system 4 of the ship and to other electric equipment installed on the ship, which is not shown in the drawing. Each of the electric propulsion systems 4 contains a ship's propeller 5 connected with an electric motor 6 which is connected with a propulsion inverter 7. The inverter 7 is connected with the ship's power network 3 through a propulsion transformer 8. The function of the transformer 8 is to adjust the parameters of electric energy in the power network 3 of the ship to the parameters of electric energy required by the type of the inverter 7 used. The inverter 7 contains an input circuit 7.1, a DC intermediate circuit 7.2 and an output circuit 7.3. The input circuit 7.1 is an AC-to-DC power electronic converter which is also called an AC/DC rectifier. The input of the AC/DC rectifier is connected with the propulsion transformer 8, and the output is connected with the DC intermediate circuit 7.2. The DC intermediate circuit 7.2 contains at least one capacitor 13 connected in parallel or at least one reactor 14 connected in series, both shown in fig. 3 and 4, or it contains their combination, which is not shown in the drawing. The output circuit 7.3 is a power electronic DC-to-AC converter which is also called a DC/AC inverter, whose input is connected with the DC intermediate circuit 7.2 and output with the electric motor 6 that drives the ship's propeller 5. At least one electric energy storage device10 is directly connected to the DC intermediate circuit 7.2 of the inverter in such way that the output of each energy storage device 10 is connected with the input of an power electronic DC-to-DC converter 9, which is also called a DC/DC converter, and whose output is coupled directly with the DC intermediate circuit 7.2.
In another invention embodiment variety presented in fig. 2, apart from the energy storage device 10, at least one fuel cell 11 and/or at least one photo-voltaic cell 12 is connected to the DC intermediate circuit 7.2 of the inverter 7. The fuel cells 11 and the photo-voltaic cells 12 are renewable sources of energy.

### Key to the drawing:

1- source of mechanical energy supply
   1.1 - diesel engine
   1.2 - gas turbine
   1.3 - steam turbine
2- synchronous generator
3- AC power network
4- the electric propulsion system of the ship
5- ship's propeller
6- electric motors driving the ship's propellers
7- propulsion inverter
   7.1 - the input circuit of the inverter (AC-to-DC power electronic converter = AC/DC rectifier)
   7.2 - DC intermediate circuit
   7.3 - the output circuit of the inverter (DC-to-AC power electronic converter = DC/AC inverter)
8- propulsion transformer
9- DC-to-DC power electronic converter (DC/DC converter)
10- electric energy storage device
11- fuel cell
12- photo-voltaic cell
13- capacitor
14- reactor

## Claims

1. The electric propulsion system of a ship incorporating an energy storage system, comprising connected with one another in sequence an electric motor (6) for driving the ship's propeller (5), a propulsion inverter (7) and a propulsion transformer (8) connected to the AC power network (3) installed on the ship and where the energy storage system contains at least one electric energy storage device(10), **characterized in that** at least one energy storage device (10) is connected to the DC intermediate circuit (7.2) of the inverter (7) in such way that the output of each energy storage device (10) is connected with the input of the DC-to-DC converter (9) whose output is directly coupled with the DC intermediate circuit (7.2), the intermediate circuit (7.2) being connected between the input circuit (7.1) of the inverter (7) and the output circuit (7.3) of the inverter (7).

2. The propulsion system according to claim 1, **characterized in that** the outputs of at least one additional DC/DC converter (9) to whose input there is connected at least one fuel cell (11) or a photo-voltaic cell (12) are connected to the intermediate circuit (7.2) of the inverter (7).

3. The propulsion system according to claims 1 and 2, **characterized in that** the input circuit (7.1) of the inverter (7) is an AC-to-DC converter.

4. The propulsion system according to claim 1, **characterized in that** the output circuit (7.3) of the inverter (7) is a DC-to-AC converter.

5. The propulsion system according to claim 1 through 3, **characterized in that** the intermediate circuit (7.2) of the inverter (7) incorporates at least one capacitor (13) which is connected in parallel into the intermediate circuit (7.2).

6. The propulsion system according to claim 1 through 3, **characterized in that** the intermediate circuit (7.2) of the inverter (7) incorporates at least one reactor (14) which is connected in series into the DC intermediate circuit (7.2).
